# EUROPEAN PATENT APPLICATION

(11) **EP 1 768 021 A1**
(43) Date of publication of application: **28.03.2007**
(21) Application number: 05019682.3
(22) Date of filing: 09.09.2005
(51) Int. Cl.: G06F 9/445

(54) **Software module installation and automatic memory release using external repositories**

(71) Applicant: MATSUSHITA ELECTRIC INDUSTRIAL CO., LTD., Kadoma-shi, Osaka 571-8501 (JP)
(72) Inventor: Vogler, Jörg, 65239 Hochheim (DE); Pfeiffer, Gerald, 76337 Waldbronn-Etzenrot (DE); Miyazaki, Akihiro, Sakai-City Osaka, 591-8032 (JP)
(74) Representative: Grünecker, Kinkeldey, Stockmair & Schwanhäusser Anwaltssozietät

(57) **Abstract**

The present invention relates to an improved installation of a module on a mobile device. When the available free program memory space is not sufficient for the installing a new software module, a currently installed module in the program memory of the device is selected and removed. Before the module is removed from the program memory the module and the associated data are copied to one or more external repositories. When the removed module is required at a later time again, the module and the relating data are transferred back to the program memory. In this way, it is possible to install a new module even though the mobile device only has a limited amount of program memory space. The features of a removed module are restored by downloading the module from the external repository and reinstall the module in the program memory.

## Description

The present invention relates to an improved installation method and apparatus. In particular, the present invention relates to the installation of a module on a mobile device having only a limited program memory.

Up-to-date mobile devices aim to provide a large number of features. Mobile devices usually operate in various environments. To adapt the devices to the respective environment a plurality of different features are required. For example, according to the location of a device, different network connections and network protocols are necessary. Further, a user wants to perform as many task as possible by means of only a single device. Hence, on the one hand the mobile device has to provide as many features as possible.

On the other hand, the mobile device is to be designed as small and light as possible. Accordingly, to reduce the weight and size of the mobile device, the device contains only limited resources. For example, the device has only a small internal memory and only a limited storage capacity.

In order to adapt the functionality of the mobile device to the present environment conditions and to the user requirements, it is possible to install additional features on demand. For example a further software module can be installed to provide additional features to the device, for instance, a new network protocol or user application. Additionally, a further hardware component, e.g. a storage device, can be connected to the device.

To install a software module on the mobile device, first the data of the module have to be transferred to the device. Further the module is copied to the program memory of the device and the mobile device is informed that the features of the new module are now available.

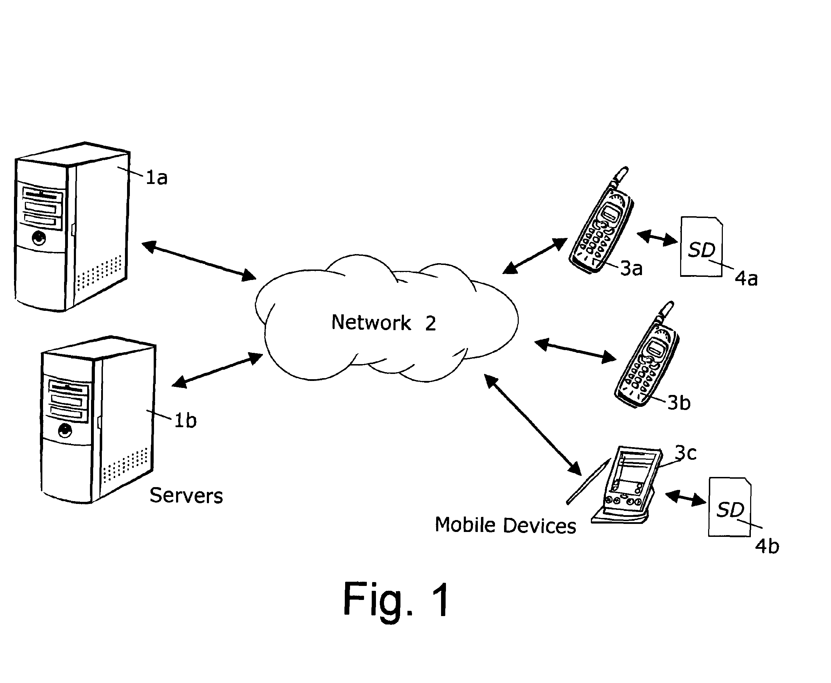

Fig. 1 illustrates an installation of a further software module obtained over network. Additional software modules are stored on the network servers 1 a and 1b. when a mobile device 3a, 3b, 3c needs to install a further software module, the mobile device establishes a connection to the servers 1 a and 1 b over the network 2. Thereafter the new module is downloaded. After the download of the module is completed, the module is installed on the program memory of the mobile device. Further, to expand the storage capacity of the devices 3a and 3c, these devices are connected to the memory cards 4a and 4b.

This concept of loadable software modules allows a very flexible design of a mobile device. Depending on the present environment conditions and the current user requirements, it is possible to install or remove a particular module. Further, a presently installed module can be updated when a new version of the module is released. Thus, this concept allows to keep the software modules always up-to-date.

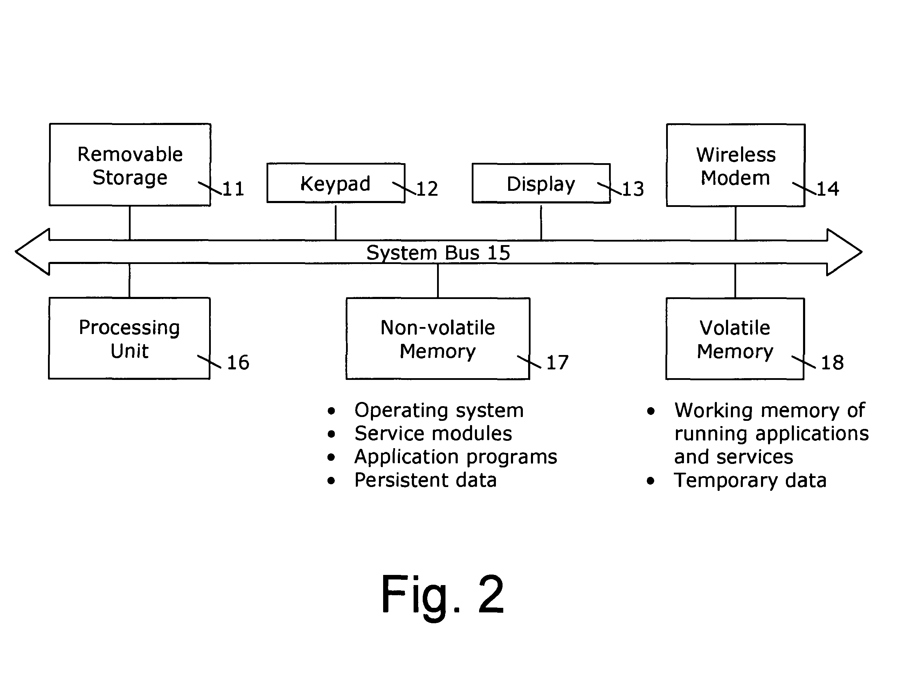

A functional configuration of an mobile device is shown in Fig. 2. A processing unit 16 is controlling the operation of the device. The software code of the operating system, of the application programs, and of the further software modules as well as the content data relating to the software modules are stored either in a volatile memory 18 or a non volatile memory 17. Further, the mobile device may comprise a keypad 12 to receive the users input, a display 13 for outputting a message and a modem, e.g. a wireless modem 14, to communicate with general devices. Additionally, a removable storage 11 may be connected to the mobile device in order to expand its storage capacity. All these components are linked together by common system bus 15.

A mobile device usually has only a limited internal memory. Accordingly, only a limited amount of additional software modules can be installed on the program memory of the mobile device at the same time. When a further module is to be installed in the program memory of the device, but the remaining free storage capacity of the memory is not sufficient, a currently installed software module has to be removed in order to obtain additional free program memory space.

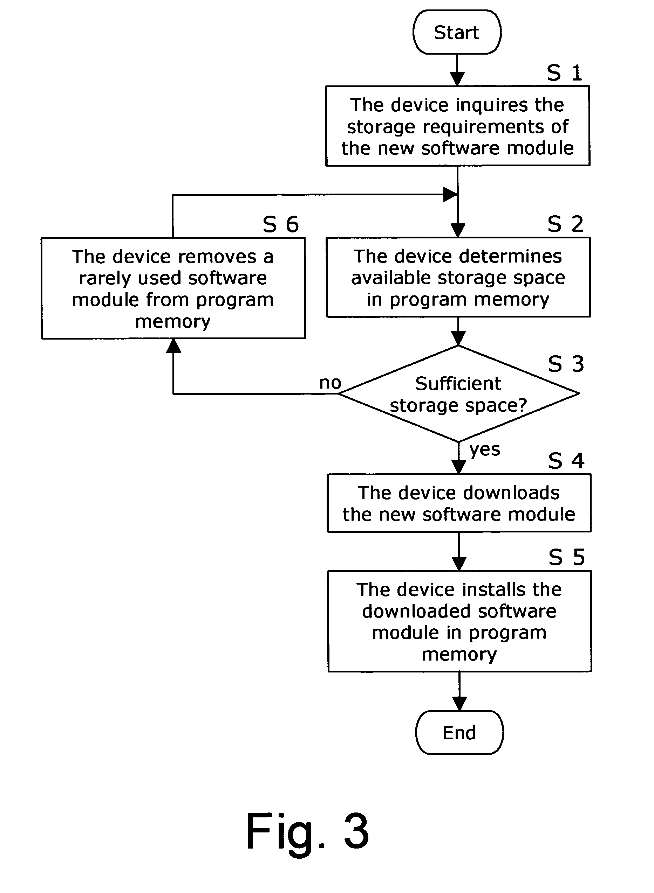

Fig. 3 illustrates a flow chart for installing a new module on the mobile device according to the prior art. When a new module is to be installed on the device, step S1 inquires the storage requirements of the new module. Thereon step S2 determines the currently available free program memory space. Step S3 decides whether or not the available storage capacity is sufficient for installing the new module. If the available free memory space is not sufficient, a currently installed module is to be removed from the program memory to obtain more memory space (step S6). When there is enough free memory space available for installing the new module, step S4 is downloading the new software module. Finally, step S5 is installing the new module in the program memory of the mobile device.

As shown in the illustrated example, one or more modules have to be deleted if the available free program memory space is not sufficient for installing the new module. Consequently, the features of the removed module are no longer available on the device. For this purpose, preferably a rarely used module or a software module being no longer required is selected for a removal when additional program memory space is needed. In this way, the probability that the functionality of the removed module is required soon again is very low.

Nevertheless, after a software module has been removed from the memory, the functionality of the module is no longer available on the device. If the features of the removed module are required at a later time again, it is necessary to newly download and install the removed software module. However, if the module cannot be downloaded, it will impossible to reinstall the module again. Hence, the relating features are finally lost.

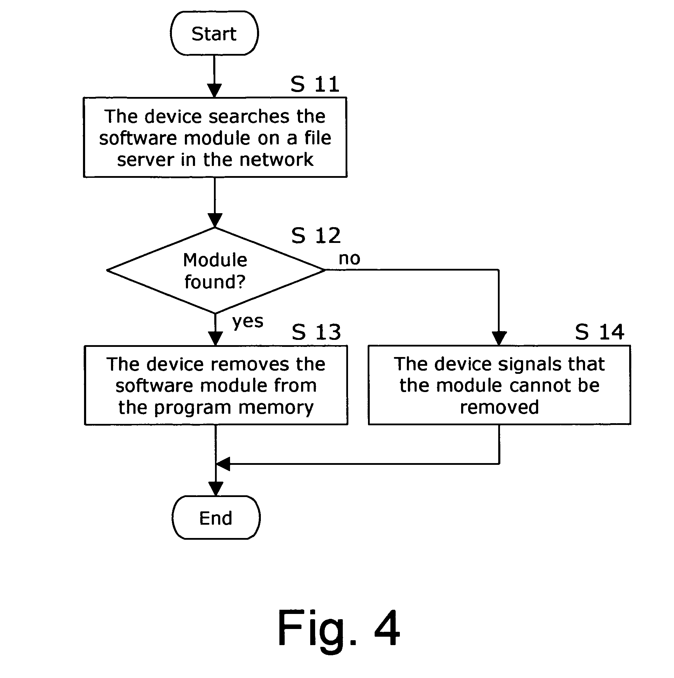

Fig. 4 illustrates a flow chart for removing a software. For this purpose, step S11 checks whether or not a selected software module is available on a connected network server. If the module is not found in the network, step S14 rejects the removal of the module. Otherwise, step S13 removes the software module from the program memory of the device. Thus, only a module being further available over the network is removed. Accordingly, the features of the removed module can be restored by downloading and installing the module at a later time again.

Another alternative to maintain the features of a software component when additional program memory space is required is described in EP 1 349 384. In order to allow a later reinstallation of a software module, the code of the software module is compressed and stored in an internal memory of the device before the module is removed from the program memory. As a compressed software code requires less memory than an installed uncompressed software module, additional memory space is obtained. However, the compressed software code still requires resources of the internal memory of the mobile device.

In the view of these prior art drawbacks, the present invention aims to provide an enhanced installation of a software module when there is currently not enough free memory space available.

This is achieved by the features of the independent claims.

According to a first aspect of the present invention, a method for installing a software module in a program memory of a mobile device is provided. After receiving a request for installing a first software module, the size of available program memory space is determined, and the size of available program memory space is compared with the program memory space required for installing the first software module. Further, a second software module currently occupying memory space in the program memory required for installing the first software module is identified, and this second software module is copied to one or more external repositories. Thereon, the second software module is removed from the program memory and the first software module is installed in the program memory.

According to another aspect of the present invention, a software module installer for installing a software module in a program memory is provided. The software module installer comprises an installation request receiver for receiving a request for installing a first software module. A memory size determiner determines the size of the available program memory space, and the comparator compares the determined size of available program memory space with the program memory space required for installing the first software module. A module selector identifies a second software module currently occupying memory space in the program memory required for installing the first software module, and a module copying means copies the second software module to one or more external repositories. Further, a removing means removes the second software module from the program memory, and an installer installs the first software module in the program memory.

It is the particular approach of the present invention to transfer a currently installed software module to an external memory before it is uninstalled on the mobile device. Thereafter the module is removed from the internal memory in order to release the occupied program memory. When the removed software module is required at a later time again, the module can be restored by retrieving the module from the external memory. In this way, a restoration of the removed software module is still possible, even though the original source (e.g. a public file server) for downloading the module is no longer available.

Preferably, it is determined whether or not the second software module is already stored in at least one external repository. The second software module is only copied if it is determined that the second software module is presently not stored in any of the repositories. In this manner the computational load and time required for the installation process is reduced when there is already a copy of the second software module in any of the available repositories.

Preferably, the frequency of use of the software modules installed in the program memory is monitored and the second software module is determined depending on the results of this monitoring step. In this manner, it is possible to remove a software module which is not needed very often. Thus, the probability that the features of such a module are required soon again is very low. Preferably, a software module having the lowest frequency of use is determined to be removed from the program memory.

Preferably, the second software module is copied to a non volatile memory. In this manner, the code of the second module is kept in the memory even though the external repository is powered off.

Preferably, the second software module is copied to a locally connected removable storage device first, and the second software module is copied from the locally connected storage device to a network storage device further. In this manner, the installation procedure including the copying of the second software module to the local storage device is carried out very fast. After the installation procedure is completed, the software module is copied to a network device at a lower speed, in accordance to the established network connection. Thereon, the software component can be restored from the network repository even though the removable storage device is disconnected in the meantime.

Preferably, the external repository is determined depending on the time required for copying the second software module to the repository. In this manner, the time for transferring the second software module to the repository is reduced and therewith, the complete time for installing a new software module is minimised.

According to another embodiment, the external repository is determined depending on the costs for copying the second software module to a repository. Hence, by selecting a repository being available over a low cost data transfer connection, the operation expenses are reduced

Preferably, preferences are received determining a repository to which the second software module is copied. Preferably, the preferences include a plurality of repositories and the copying step copies the second software module to each repository included in the preferences. In this manner, it is possible to create a user defined profile for selecting one or more repositories.

According to a further preferred embodiment, the preferences indicate an order for selecting a repository and only a single repository is selected depending on preferences. Thus, according to the defined list of repositories the first available memory is used for storing the software module.

Preferably, an information indicating the repository used for storing the second software module is stored. In this manner, the module is easily found during a later restoration procedure.

Preferably, user data relating to a software module installed in the program memory are stored. Thus, when a software module is restored, the relating user data can be restored, too. Consequently, the software module has the same state as before the removal. Preferably, the user data of the software module are copied to one or more external repositories when the second software module is copied. In this manner, no internal memory space is occupied by this data as long as the module is uninstalled. Consequently, additional free internal memory space is obtained.

Preferably, a license information is assigned to the second software module. The second software module may require a particular license information for executing the module or for enabling additional functionalities of the module. In such a case, the necessary license information has to be obtained and assigned to the respective software module when the module is installed on the device. Preferably, the second software module is determined depending on the license information. Preferably, when the license information is valid only for a predetermined time, the second software module is determined depending on the expiration time of the license information. In this manner, it is possible to select a software module with an already invalid license or a license which will expire very soon.

Preferably, the license information includes a license key, and this license key is copied to one or more external repositories when the second software module is copied. Further, the license key is obtained from an external repository and the second software module is restored based on the obtained license key. In this manner, the removed software module as well as the assigned license information can be restored.

Preferred embodiments of the present invention are the subject matter of the independent claims.

Other embodiments and advantages of the present invention will become more apparent from the following description of preferred embodiments, in which:
- Fig. 1: illustrates an installation of a further software module obtained over network,

- Fig. 2: illustrates a functional configuration of a mobile device,
- Fig. 3: illustrates a flow chart for installing a new software module according to the prior art,
- Fig. 4: illustrates a removal of a software module from the program memory according to the prior art,
- Fig. 5: illustrates a flow chart of an example for removing a software module during the installation process according to the present invention,
- Fig. 6: illustrates a flow chart of an example for restoring a removed software module according to the present invention,
- Fig. 7: illustrates an example configuration of a releasing apparatus according to the present invention, and
- Fig. 8: illustrates the data flow during a software module removal and restoration according to the present invention.

The present invention relates to the installation of a software module, in particular to the installation of a module in a mobile device having only a limited program memory.

The functionality of up-to-date mobile devices can be expanded by the installation of additional software modules. Such a module contains software code for carrying out predetermined operations on the device. An example for a software component is a specialised driver software for controlling the hardware of the device, e.g. employing a network adaptor. Further examples of the software modules are a user application or an internal routine, for instance, a particular coding/decoding routine.

In order to install a software module on the device, the software code is to be locally stored. For example, the software code is read from a currently connected external storage device or recording medium, or the software module is obtained from a network server 1 over a network 2 as shown in Fig. 1. After the software code is received, the module is copied to the program memory of the device and the address where the module has been stored in the memory is indicated to the operation system.

The network servers 1 a and 1 b of Fig. 1 store a plurality of software modules. These modules, for instance, are software modules released by device manufacturers, network operators, service providers or other software manufacturers. When a mobile device 3a, 3b or 3c is connected over the network 2 to any of the servers, the mobile device can download the software modules stored on these server. Thereon the software module is installed in the program memory of the mobile device.

Each additional software module installed in the program memory requires further memory space. As the mobile device only comprises a limited amount of program memory space only a limited number of software modules can be installed in this program memory. Consequently, when a further module is to be installed in the program memory, a currently installed software module has to be removed.

However, when a software module is removed, the features of this module are no longer available. If the features of a removed software module are required at a later time again, the module has to be reinstalled in the program memory. In this case, the user has to newly configure the module. However, a new installation of a removed software module is only possible if the software code is still available, for instance, from a local storage device or a network server. Otherwise, the software module and the related features are finally lost.

The present invention aims to overcome these drawbacks. It is for this purpose that a software module and the data assigned to this module are copied to one or more external repositories before the module is removed from the program memory.

Many software modules operate in conjunction with additional configuration data. For example, a user may define personal preferences for employing the software module. These preferences, for instance, contain definitions regarding the output of data on a display (e.g. font size and colour), access data for establishing a particular network connection (e.g. login data), or system settings (e.g. preferred language). These data usually are stored in the memory of the device. too.

Further, the software module operates in conjunction with additional content data. For example, a word processing application is reading and storing text files. A game software memorises the current level and a high score list. An address application requires additional memory for storing the contact data of the addresses.

To keep the additional configuration and content data even though the mobile device is powered off, these data are stored in a non-volatile memory. For example, the data are stored on a hard disc drive, an optical recoding device, a floppy disc, or an build-in or removable memory card, e.g. a flash memory.

All these additional data relating to a particular software module are occupying further memory space, too. An the one hand, these data can be removed when uninstalling the relating module. Thus, additional free memory space is obtained. On the other hand, when restoring the module, these additional data are required again to continue the operation of the module at the same state as before the removal. Otherwise, the additional data are lost, and the module has to be newly configured during the reinstallation procedure.

Accordingly, to enable a later restoration of a software module, the additional data associated to the module are also copied to an external repository before the module is removed from the internal memory of the device. Thus, it is possible to continue the operation of the module after the restoration at the same state as before the removal. In this case, the module and the additional data may be either copied to the same or different repositories. For example, the additional data are stored on a locally connected storage device and the software module is transferred to a network repository.

Further, a particular network resource may be available for storing the additional configuration or the content data relating to the removed module. In this case the location of the additional data is well known and is would not be necessary to search for these data in the whole network. Further, such a particular server may provide additional security mechanism. Thus, the private additional data are protected against unallowable access.

Additionally, a software module may be subjected to a particular license. For example, a user is only allowed to use the software module a predetermined number of times or for a predetermined time period. According to another license example, the user has to pay before downloading or installing the software on the mobile device. In order to prohibit an unauthorised usage of the software module, an additional license information is assigned to the software module. This license information allows the execution of the module on a particular device or by a predetermined user. Further, the license information may limit the time period for executing the software module. Additionally, it is possible to activate or deactivate any of the features provided by the software module depending on the assigned license data.

When a software module subjected to a particular license is to be restored, the assigned license data have to restored, too. Otherwise, it is not possible to further employ the module.

For this purpose, an external license server is managing the licenses of the installed software modules. When a module is to be newly installed, the mobile device is sending a request to this license server in order to obtain a new valid license. With this license it is possible to further execute the module after the reinstallation.

In the case that no license server is available for a particular module, the license information has to be saved, too. Therefore the license information is stored either in the internal memory of the device or an external storage device. It is for this purpose that at least a license key, which is necessary for restoring the whole license information, is stored when the module is removed. For example, the license information is stored in the non-volatile memory of the mobile device. Another possibility to preserve the license information is to store the license on an external repository in the same manner as the module or the additional data assigned to the module.

When it is requested to install a new software module in the program memory of the mobile device, first the requirements for installing the new software module are determined. For this purpose, it is necessary to determine the amount of free program memory space needed for installing the software module. For example, the requirements of the new module can be included in the request for installing the new software module. Furthermore, this information can be obtained by referring to the storage device where the new module presently is stored.

Next, the presently available free program memory space of the mobile device is determined. This is achieved, for example, by summarising all areas of the program memory currently not occupied. If it is required to install the new software module in a contiguous memory area, the largest continuous memory area is determined. Thereon, the currently available free memory space is compared with the requirements for installing the new software module. If the available free memory space is larger or equal than the requirements of the new software module, the new module is installed in the program memory. Otherwise, a currently installed module is identified which has to be uninstalled and removed from the program memory of the mobile device to obtain additional free memory space.

To allow a further reinstallation of the removed software module, the software module is transferred to another memory before removing the module from the program memory. This additional memory could be a special internal memory as well as an external repository. However, an additional internal memory would require further resources of the mobile device. Thus, the weight and size of the mobile device increases. Additionally, the storage capacity of such an internal memory is limited. Consequently, the number of modules stored in the internal memory is also limited.

In the view of the above mentioned limitations and drawbacks, the software module is preferably transferred to an external repository. Examples of such external repositories are pluggable storage devices, for instance, a hard disk drive or an optical storage device, or a storage media, for instance a SD-card or a CD/DVD-RW. Furthermore, the software module could also be transferred to another device over a network. For example, the module is copied to a network storage device or a server in the network. In particular, the network servers 1 a and 1 b of Fig. 1 may also provide additional storage capacity for the storage of such software modules, which are removed from the memory of the mobile device..

In order to perform a data exchange over the network, the mobile device has to establish a network connection. Although it is possible to establish the network connection by means of a wired network connection, e.g. by plugging in a network cable into the mobile device or connecting the mobile device to a docking station, the network connection is preferably established using a wireless network connection. For example, the mobile device may establish the wireless connection using a wireless modem 14 as shown in Fig. 2, in connection with a wireless telecommunication network, e.g. GSM or UMTS. Further, the wireless network connection could also be establish by means of a wireless LAN or any other types of wireless connections (e.g. Bluetooth, infrared, etc).

Some network repositories are only available over a particular network connection. For example, the access to a network server may be only possible within a limited network area (e.g. an intranet or the home network of the service provider), or over a secure network connection using a particular network protocol. Accordingly, different network repositories are available depending on the established network connection.

Additionally, different data transfer rates between the mobile device and a currently available network repository can be achieved. The transfer rate may vary depending on the established network connection and the performance of the relating network storage device. To reduce the time for copying the data to a network repository, the repository is selected depending on the data rate.

However, a data transfer over a network connection may cause additional costs. These costs are varying depending on the established network connection. For example a data transfer over an internal network, for instance, a local network (LAN), is very cheap. In contrast to this, the data transfer using a third party network, for instance, a roaming connection over an external communication network, causes very high costs. In order to reduce the operational costs when transferring data to an external storage, the repository may be selected depending on the expected costs for the data transfer.

According to the above-described advantages and disadvantages, different approaches for selecting the repository are possible with respect to security, costs and speed. For this purpose, policies are defined for determining an appropriate external storage device as a repository for storing a software module and the associated data.

These policies may comprise constraints of the device manufacturer or the network operator as well as user preferences regarding the selection of an external repository. For example, these policies may restrict the storage of the software module to a particular medium or repository. Further, these properties may allow or disallow the storage on a removable locally connected medium or a particular network device. Additionally, these properties may also contain rules and limitations for selecting a repository regarding to speed, costs or a particular network connection. The policies may be stored either locally on the device or remotely on a particular network server.

To further minimise the time and data transfer when removing a software module, the transfer of a module suspended when the module is already external available. For example, module is available on a public file server. Additionally, the module could also be found on a currently available repository. It is for this purpose that the device checks whether the module is already stored on an storage device. In this case, the transfer of the module to an external repository is skipped. To resume the module after a later restoration, only the additional configuration and content data have to be stored.

Usually, the data transfer to a locally connected storage device is much faster than the data transfer over a network. Accordingly, the time for transferring a module to an external repository can be minimised by storing the data on a local repository. After the uninstallation process has been completed, the data are copied form the local storage device to a network repository at a later time.

In order to further adapt the selection of the repositories for storing the software module and the associated data, it is possible to define preferences. For example, the preferences may comprise a list of repositories and the software module is copied to each of those repositories currently available.

Otherwise, it may be sufficient to save the data in a single repository. In this case, it is possible to define rules for selecting one repository, For example, these rules comprise a list defining the order for selecting a repository. Based on the order of this list, the first available repository is selected.

Additionally, the repository can be selected depending on the security requirements. On the one side, a public module may be stored on any storage device without any security concerns. On the other side, private modules or data have to be stored only on a secure storage device. For this purpose, the list of allowable repositories is limited to those repositories providing particular security options. For example, only a local storage device providing an encrypted storage or a secure network device being available over a special network connection is allowable.

Each removal and restoration of a module requires computational effort and time. To reduce the load of the mobile device, the number of removals and restoration procedures is to be minimised. For this purpose, a rarely used module is selected, when additional program memory space is needed and a software module is to be removed.

Accordingly, the usage of the installed software modules is monitored and a software module is selected based on the monitoring results. For example, the mobile device counts the number of accesses to each software module within a predetermined period of time. The module having the lowest number of accesses is removed when additional memory space is required.

Another example is to protocol the time, when a module is last employed. When it is requested to remove a module, the module being the longest time unused is selected.

According to another embodiment of the present invention, the software module to be removed is selected based on the license information assigned to the software module. For example, a module having an expired license is selected for the removal. If all software modules have a currently valid licence, the software module with the license which expires next is selected.

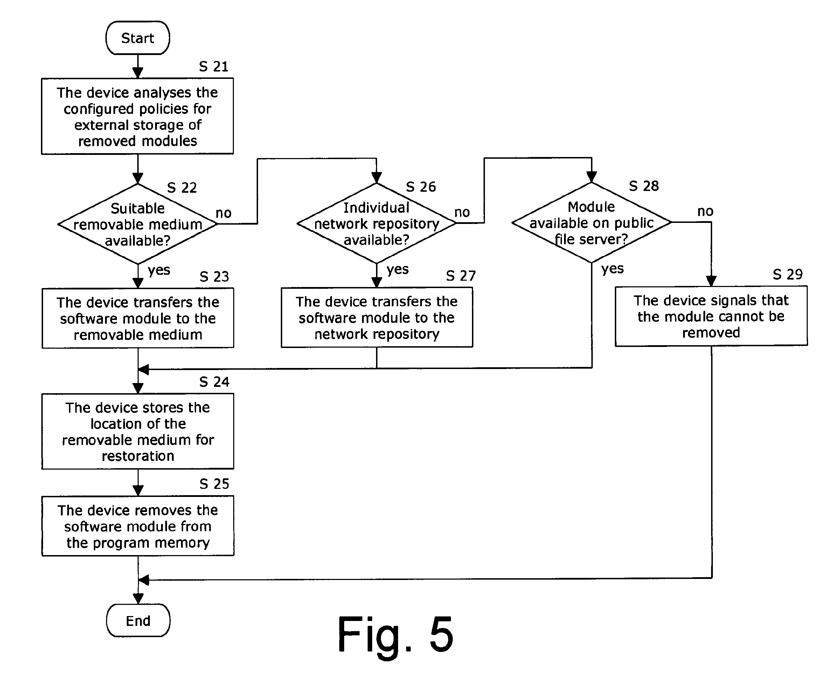

Fig. 5 illustrates a flow chart for storing a software module in an external repository according to the present invention. When a software module is to be removed from the program memory, step S21 analyses the specified policies for an external storage of the software module. If the storage on a removable medium is allowed and a suitable removable local storage medium is available, step S23 copies the software module to the removable medium. Thus, a very fast. data transfer to the locally connected repository is carried out

Otherwise, step S26 determines whether or not a network repository is available in compliance with the policies for selecting an external storage. If an allowable network repository is available, step S27 copies the software module to the network repository. Otherwise, step S28 determines whether or not the selected software module is available on a public file server. In this case, it will be possible to install the module later from this server. If the selected module is not available on a public file server, S27 rejects the request for releasing the software component. Consequently, another module has to be removed to obtain additional free program memory space, or an adequate external repository has to be made available.

If the selected software module has been stored on a removable medium or a network repository, or the module is available on a public file server, step S24 stores the location where the software module is available after the removal. Finally, step S25 removes the software module from the program memory. Hence, additional program memory space is made available for installing a new software module.

When the module is to be restored in the program memory of the device, the software code and - if available - the associated data have to be received from an external repository. To accelerate the determination of the place where the required data are available, step S24 memorised the location where the data have been copied.

For this purpose, the location of the data is stored in set of data comprising the storage device, and the directory and the file name where the data are stored an the respective storage device.

If the data have been transferred to a removable storage device or medium, an identifier, e.g. an unique name or a serial number, is recorded. When the module is to be restored, the mobile device checks whether the required storage device is available. Otherwise, the user is requested to connect the storage device having the correct identifier.

In the case the data have been copied to a network repository, the network address of the storage device is stored. For example, the network device is identified by an IP-address or an unique network name. Further, the location of the data in the network is stored, for instance, by means of an uniform resource locator (URL). Such an URL is used, for instance, to describe an internet address.

When the removed software module is to be restored at a later time again, the position of the required data are determined by means of the memorised location. In case the memorised location is currently not available, for instance, due to a broken network connection or because the removable device is not connected, the device is searching for the required module in the available connected repositories, e.g. a public file server. If the required data are found, the module is loaded and newly installed in the program memory of the mobile device.

Preferably, a user defines some preferences for searching the required data. For example, this preferences define a particular location. If the module is not found at this location, the restoration of the module fails.

Another example is to generate a list of repositories defining an order for searching the required data. Based on this definition, the mobile device is locking for the module in each of the locations included in this list.

A further possibility is to define a set of preferred repositories. Thereon the mobile device is searching the data of the module in each of the preferred locations. If the module is not found in any of this repositories, the mobile device may further search the required data in any other available repository.

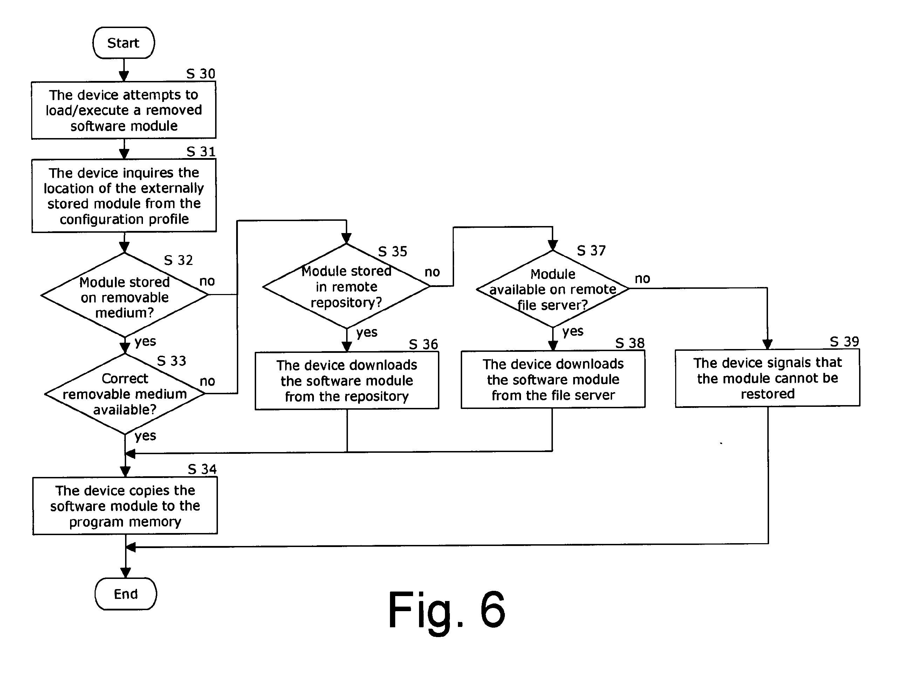

Fig. 6 illustrates a flow chart showing an example for a reinstallation of a removed software module. When step S30 detects that the features of a removed software module are required again, step S31 inquires the location of the repository where the software module has been stored before it was removed from the program memory. If the module has been stored on a removable medium (S32) and the correct removable medium is currently available (S33), step S34 loads the software code and installs the module in the program memory. If the correct removable medium is currently not available the user is requested to connect the correct removable medium to the device. After the correct storage medium is available, the required data are read and the module is restored.

In the case step S32 determines that the required software module is not stored on a removable medium, step S35 searches the module on a network repository. For this purpose, either a memorised network address is used or all available network repositories are checked. If a software module is available on a network repository, step S36 downloads the module from this repository and step S34 installs the module in the program memory.

If the required software module is not available on any network repository, step S37 searches the required module on a public file server. When the module is found on a file server step S38 downloads the software module from this server and step S34 installs the software module on the program memory. If the required module is also not found on an available file sever it is not possible to reinstall the required module. Thus, step S39 indicates that the module cannot be restored and the required features are currently not available.

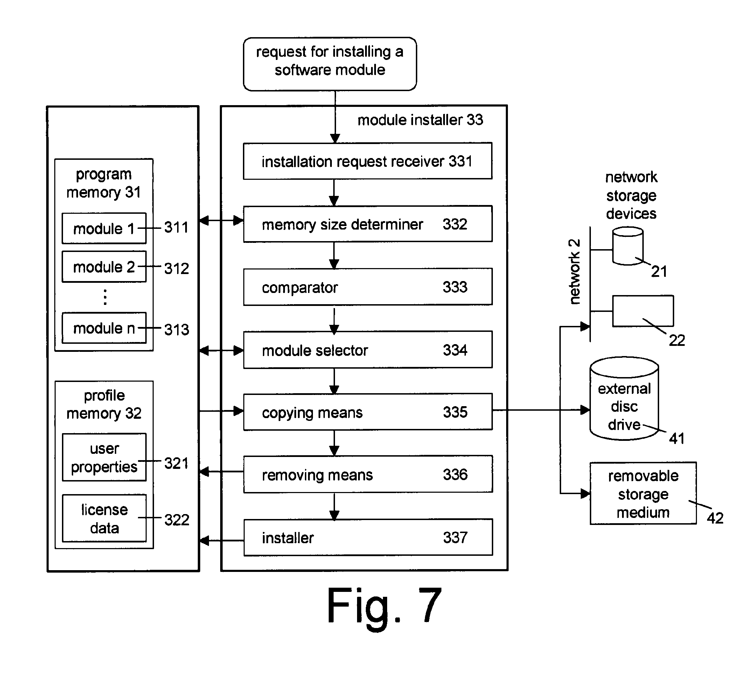

Fig. 7 illustrates and example configuration of a software module installer 33, according to the present invention. The installer is connected to a memory and to one or more external repositories (21, 22, 41 and 42). The memory is comprising a program memory 31 containing software modules 311, 312 and 313, user properties 321 and license data 322. The external repositories comprise locally connected storages, e.g. an external disk drive 41 or a removable storage medium 42. Additionally, further network repositories 21 and 22 are available over the network 2.

When it is requested to install a new software module in the program memory of the mobile device, this request is received by the installation request receiver 331. Thereon, a memory size determiner 332 determines the currently available program memory space and a comparator 333 compares the determined size of available program space with the requirements for the installation of the new software module.

If the comparator determines that the size of available free program memory space is not sufficient for the installation of the new software module, a module selector 334 determines a currently installed software module in the programme memory which is to be removed for obtaining additional program memory space. In order to allow a further reinstallation of the selected software module, a copying means 335 copies the selected software module to at least one external repository. When there are some additional data associated with the selected software module, for instance, configuration data, user properties or license data, these data are copied to one or more external repositories, too.

Thereon, removing means 336 uninstalls and removes the selected software module from the program memory of the device. Hence, additional free program memory is available. If the new amount of free available program memory space is still not sufficient for installing the new software module, module selector 334 selects a further software module which is copied and removed in the same manner as described before. When the available program memory space is sufficient, installer 337 is downloading the new software module and installing the software module in the program memory 31 of the device.

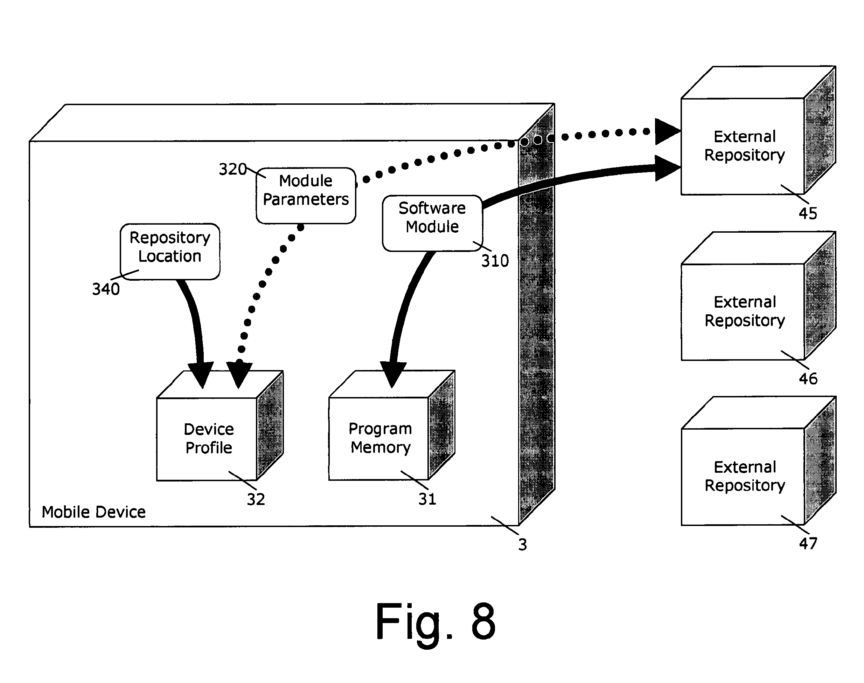

Fig. 8 illustrates the data flow during the removal and restoration of the software module according to the present invention. The mobile device 3 comprises a program memory 31 for storing the software code of the modules and a device profile memory 32 for storing additional data relating to the software modules. These additional data include, for instance, the parameters of the module, e.g. license data, configuration parameters, license information, etc. In order to keep these data when the device is powered off, the profile memory preferably is a non-volatile memory.

When additional free program memory space is required, a software module 310 is transferred to at least one external repository 45 - 47. Additionally, the module parameters 320 are transferred to an external repository, too. Only for illustrative purposes, in this example the software module and the module parameters are stored in the same external repository. Thereon, the location of the repository where the software module and the parameters are stored is memorised in the device profile memory 32 of the mobile device.

If it is necessary to reinstall a removed software module, the location of the repository where the software module has been stored is read from the device profile memory 32. Thereon, the software module 310 and the module parameters 320 are transferred from the external repository to the internal memory of the mobile device. After the transfer and the reinstallation of the software module is completed, the features and the relating data of the software module are available in the same manner as before the removal.

Summarising, the present invention relates to an improved installation of a software module on a mobile device when the available free program memory space is less than the program memory space required for the installation of the new software module. In this case, a software module currently installed in the program memory of the device is selected and removed. Before the software module is removed from the program memory the module and the associated data are copied to one or more external repositories. When the removed module is required at a later time, the software module and the relating data are transferred back to the program memory. In this way, it is possible to install a new software module even though the mobile device only has a limited amount of program memory space. The features of a removed software module can be restored by downloading the software module from the repository and newly install the module in the program memory.

## Claims

1. A method for installing a software module in a program memory (31) of a mobile device (3), said method comprising the steps of:
receiving a request for installing a first software module,
determining the size of available program memory space,
comparing said size of available program memory space with the program memory space required for installing said first software module,
identifying a second software module (310) currently occupying memory space in said program memory (31) required for installing said first software module,
copying (S23, S27) said second software module (319) to one or more external repositories (45, 46, 47),
removing said second software module (310) from the program memory (31), and
installing said first software module in said program memory (31).

2. A method according to claim 1, further determining whether or not said second software module (310) is already stored in at least one of said external repositories (45, 46, 47), and copying said second software module (310) if it is determined that the second software module (310) is not stored in any of said external repositories (45, 46, 47).

3. A method according to claim 1 or 2, further comprising the steps of:
monitoring the frequency of use of said software modules (311, 312, 313) installed in said program memory (31), and
determining said second software module (310) depending of the results of said monitoring step.

4. A method according to claim 3, determining the software module having the lowest frequency of use for removing from said program memory (31).

5. A method according to any of claims 1 to 4, wherein said copying step (S23, S27) copies said second software module (310) to a non-volatile memory.

6. A method according to any of claims 1 to 5, wherein said copying step (S23) copying said second software module (310) to a locally connected removable storage device first, and further copying said second software module (310) from the locally connected storage device to a network storage device.

7. A method according to any of claims 1 to 6, further determining said external repository (45, 46, 47) depending on the time required for copying said second software module (310) to the repository.

8. A method according to any of claims 1 to 6, further determining said external repository (45, 46, 47) depending on the costs for copying said second software module (310) to the repository.

9. A method according to any of claims 1 to 6, further receiving preferences for determining a repository (45, 46, 47) to which the second software module (310) is copied.

10. A method according to claim 9, wherein said preferences include a plurality of repositories, and said copying step (S23, S27) copying the second software module (310) to each repository included in said preferences.

11. A method according to claim 9, wherein said preferences indicate an order for selecting a repository, and said method further determining a single repository based on the preferences.

12. A method according to any of claims 1 to 11, further storing an information indicating the repository used for storing said second software module (310) in a local repository memory (21, 22).

13. A method according to any of claims 1 to 12, further storing user data (312) relating to a software module (311, 312, 313) installed in said program memory (31).

14. A method according to claim 13, further copying said user data (312) of the respective software module to one or more external repositories (45, 46, 47) when copying said second software module (310).

15. A method according to any of claims 1 to 14, wherein a license information (322) being assigned to said second software module (310).

16. A method according to claim 15, determining said second software module (310) depending on said license information (322).

17. A method according to claim 15, wherein said license information (322) being valid only for a predetermined time, and said second software module (310) being determined depending on the expiration time of the license information (322).

18. A method according to claim 15, wherein said license information (322) including a license key, said method further comprising the steps of:
copying said license key to one or more external repositories (45, 46, 47) when copying said second software module (310),
obtaining a license key from an external repository (45, 46, 47), and
restoring said second software module (310) based on the obtained license key.

19. A software module installer for installing a software module in a program memory (31), comprising:
an installation request receiver (331) for receiving a request for installing a first software module,
a memory size determiner (332) for determining the size of available program memory space,
a comparator (333) for comparing the determined size of available program memory space with the program memory space required for installing said first software module,
a module selector (334) for identifying a second software module (310) currently occupying memory space in said program memory (31) required for installing said first software module,
a module copying means (335) for copying said second software module (310) to one or more external repositories (21, 22, 41 42),
a removing means (336) for removing said second software module (310) from the program memory (31), and
an installer (337) for installing said first software module in said program memory (31).

20. A software module installer according to claim 19, further comprising a further determiner for determining whether or not said second software module is already stored in at least one of said external repositories (21, 22, 41, 42), wherein said module copying means (335) copying said second software module (310) to an external repository (21, 22, 41, 42) only if it is determined that said second software module (310) is not stored in any of said external repository (21, 22, 41, 42).

21. A software module installer according to claim 19 or 20, further comprising a monitor for monitoring the frequency of use of said software modules (311, 312, 313) installed in said program memory (31), wherein said module selector (334) determining said second software module (310) depending on the results of said monitor.

22. A software module installer according to claim 21, wherein said module selector (334) determining said second software module (310) having the lowest frequency of use detected by said monitor.

23. A software module installer according to any of claims 19 to 22, wherein said module copying means (335) copying said second software module (310) to a non-volatile memory.

24. A software module installer according to any of claims 19 to 23, comprising
a locally connected removable storage means (42), and
a network storage device (21, 22),
wherein said module copying means (335) comprising a first copying means for copying said second software module (310) to a locally connected removable storage device (42) first, and a second copying means for copying said second software module (310) from the locally connected storage device (42) to the network storage device (21, 22) later.

25. A software module installer according to any of claims 19 to 24, further comprising:
a transfer time determiner for determining the time required for copying said second software module (310) to a repository (21, 22, 41, 42), and
a repository determiner for determining an external repository (21, 22, 41, 42) depending on said transfer time determined by said transfer time determiner.

26. A software module installer according to any of claims 19 to 24, further comprising:
a transfer cost determiner for determining the costs for copying said second software module (310) to the repository (21, 22, 41, 42), and
a repository determiner for determining an external repository (21, 22, 41, 42) depending on said transfer costs determined by said transfer cost determiner.

27. A software module installer according to any of claims 19 to 24, further comprising
a repository preference receiver for receiving preferences for determining a repository (21, 22, 41, 42) to which said second software module (310) being copied,
a repository preferences memory for storing said received preferences, and
a repository selector for determining an external repository (21, 22, 41, 42) depending on said stored preferences.

28. A software module installer according to claim 27, wherein said repository preference receiver receiving an indication for a plurality of repositories, and said module copying means (335) copying said second software module (310) to all repositories indicated in said received repository preferences.

29. A software module installer according to claim 27, wherein said repository preference receiver receiving a preferred order for selecting a repository (21, 22, 41, 42), and said repository selector determining a single repository (21, 22, 41, 42) based on said received preferences.

30. A software module installer according to any of claims 19 to 29, further comprising a repository memory (32) for storing information (340) indicating the repository used for storing said second software module (310) being copied.

31. A software module installer according to any of claims 19 to 30, further comprising a user data memory for storing user data (321) relating to said software modules (311, 312, 313) installed in said program memory (31).

32. A software module installer according to claim 31, further comprising a user data copying means for copying the user data (321) relating to said second software module (310) to one or more external repositories (21, 22, 41, 42) when copying said second software module (310).

33. A software module installer according to any of claims 19 to 32, further comprising a license memory for storing license information (322) in association with a software module (311, 312, 313) installed in said program memory (31).

34. A software module installer according to claim 33, wherein said module determiner (334) determining said second software module (310) depending on said license information (322) stored in said license memory.

35. A software module installer according to claim 33, wherein said module determiner (334) determining said second software module (310) depending on an expiration date of said license information (322) stored in said license memory.

36. A software module installer according to any of claims 33 to 35, further comprising
a license key transfer means for copying a license key stored in said license memory to one or more external repositories (21, 22, 41, 42),
a license receiver for obtaining a license key from an external repository (21, 22, 41, 42), and
a restoring means for restoring said second software module (310) based on said license key obtained by said license key receiver.

37. A computer program product comprising a computer readable medium having computer readable program code embodied thereon, the program code being adapted to carry out all steps of any of claims 1 to 18.
